# FASCICULE DE BREVET EUROPEEN

(11) **EP 0 506 579 B1**
(45) Date de publication et mention de la délivrance du brevet: **14.08.1996**
(21) Numéro de dépôt: 92400868.3
(22) Date de dépôt: 27.03.1992
(51) Int. Cl.: G21F 9/32

(54) **Procédé et dispositif pour l'incinération de graphite, en particulier les blocs de graphite irradiés**
Verfahren und Vorrichtung zur Einäscherung von Graphit, insbesondere von bestrahlten Graphitblocken
Process and device for incinerating graphite, in particular irradiated graphite-blocks

(30) Priorité: 29.03.1991 FR 9103871
(43) Date de publication de la demande: 30.09.1992
(73) Titulaire: COMMISSARIAT A L'ENERGIE ATOMIQUE, 75015 Paris (FR)
(72) Inventeur: Costes, Jean-Raymond, F-26790 Rochegude (FR); Koch, Charles, F-26740 Sauzet (FR)
(74) Mandataire: Poulin, Gérard

(56) Documents cités:
- DE-A- 2 029 608
- US-A- 4 940 519
- US-A- 4 960 380
- Patent Abstracts of Japan, Patent Office of Japan, Tokyo, Japan & JP-A-57 150 722
- Patent Abstracts of Japan, Patent Ofiice of Japan, Tokyo, Japan & JP-A-57 150 730
- WORLD PATENTS INDEX LATEST, Derwent Publications Ltd., London, GB; AN 85-090668 & JP-A-60 041 000

## Description

L'invention concerne un procédé et un dispositif pour l'incinération de graphite, notamment de blocs de graphite ayant été irradiés par des neutrons.

Des réacteurs nucléaires uranium-graphite-gaz (UNGG) sont maintenant arrêtés ; d'autres le seront dans un proche avenir. Pour des raisons évidentes de sûreté et de sauvegarde de l'environnement, ils doivent être démantelés. Le démantèlement consiste à retirer de l'installation le maximum d'éléments radioactifs ou non, à les immobiliser si besoin, dans un milieu apte à assurer leur confinement (non dissémination des radioéléments dans l'environnement, et non irradiation), et à traiter le reste de l'installation (décontamination, coulées de béton, etc.) pour la rendre sûre vis-à-vis de l'environnement.

Les réacteurs UNGG possèdent des coeurs en graphite. Le graphite a été fortement irradié et de plus, il est contaminé.

Lors du démantèlement, il faut pouvoir traiter ces coeurs de graphite, soit en les sortant du réacteur et en les traitant dans des enceintes spéciales, soit en les traitant in situ dans le réacteur. Cette dernière solution est préférable car l'enceinte du réacteur assure elle-même la non-dissémination des particules radioactives. Il n'y a alors plus besoin d'extraire et manutentionner les briques de graphite, ni de construire des enceintes spéciales pour leur traitement.

Par ailleurs, on ne peut pas confiner les briques de graphite en l'état, par exemple les mettre en fût et les isoler de l'environnement. En effet, le volume des déchets serait alors trop important et nécessiterait des zones de stockage très étendues.

Il faut donc détruire le graphite et une solution est la combustion sous oxygène.

Malheureusement, le graphite que l'on rencontre dans ces réacteurs, qui a subi, sous l'effet de l'irradiation, une ou deux étapes de graphitisation, est peu poreux (20 % de porosité ouverte en volume) et ne contient plus de matière volatile. Il est par conséquent difficile à incinérer.

La plupart des moyens connus pour brûler du graphite (par brûleurs, par lit fluidisé, ...) demande un concassage préalable des briques de graphite, suivi d'un broyage fin qui peut aller jusqu'à 30 µm. Ceci a pour effet d'augmenter la surface de contact entre le graphite et l'oxygène, de façon à obtenir une vitesse de combustion acceptable industriellement aux températures de travail habituelles.

De tels procédés présentent de graves inconvénients avec du graphite contaminé préalablement irradié :
- le broyage fin crée un volume très important de matière, ce qui nécessite des réservoirs de stockage importants ou de grandes chambres de combustion,
- les difficultés du broyage sont augmentées car la dureté du graphite s'est accrue sous l'effet de l'irradiation neutronique reçue pendant l'exploitation du réacteur,
- le broyage peut introduire des impuretés dans le graphite initial, qui est d'une grande pureté ; ces impuretés peuvent gêner la combustion et se retrouver dans les cendres, ce qui augmente le volume des déchets et peut éventuellement gêner leut traitement,
- il y a génération d'une grande quantité de poussières qui vont se retrouver sur les filtres de ventilation ; l'exploitant est alors amené à changer fréquemment les filtres ; par ailleurs, ceux-ci devant être ensuite confinés, il y a alors surcoûts à l'exploitation et au stockage,
- dans le cas où la combustion est effectuée au moyen d'un brûleur, on constate que les rendements sont difficiles à contrôler.

Par ailleurs, le document US-A-4 940 519 décrit différentes installations pour l'incinération de déchets toxiques sous forme fluide et notamment liquide, au moyen d'un ou plusieurs lasers de puissance. Les décheus liquides sont pulvérisés dans les faisceaux émis par les lasers.

La demanderesse propose un procédé et un dispositif palliant aux inconvénients des procédés existants, nécessitant le broyage des blocs de graphite avant leur incinération. Ce procédé et ce dispositif sont définis respectivement par les revendications 1 et 5.

Le graphite peut être pur (de préférence) ou contenir des impuretés, selon son origine. Sa dureté et sa conductivité thermique dépendent de sa nature à l'origine et du traitement qu'il a subi.

Ainsi le graphite non irradié présente à 1000°C une conductivité thermique de 70 W/mK alors que pour le graphite irradié, elle est de 7 W/mK. Le procédé s'adapte à ces valeurs variables ; il s'applique particulièrement bien au graphite ayant des conductivités thermiques faibles.

Le laser utilisé doit pouvoir émettre de façon continue à une longueur d'onde capable d'être absorbée par le graphite à traiter, il doit être suffisamment puissant pour apporter l'énergie nécessaire à la combustion, et plus précisément pour atteindre la température de combustion rapide souhaitée sur une surface éclairée la plus grande possible.

Actuellement, il existe sur le marché des lasers CO₂ de puissance qui conviennent (10 µm et 22 kW ou 30 kW). Avec un tel laser, on obtient des puissances d'au moins 80 W/cm² éclairé.

On a constaté que le rayon laser présente avantageusement une inclinaison entre 0° et 70° par rapport à la perpendiculaire au plan moyen de la surface éclairée.

Le graphite, soumis à cet éclairage, absorbe l'énergie apportée par le laser dont une partie sert à augmenter la température du graphite éclairé, l'autre partie se dissipant par conduction dans le graphite ou sous d'autres formes dans l'atmosphère ambiante (atmosphère qui entoure le graphite au moment de l'éclairage).

Comme, pour des raisons d'exploitation industrielle, on cherche à avoir la cinétique de réaction la plus rapide (0,05 kg/s.m² à 0,25 kg/s.m²), donc à élever le plus rapidement possible la température du graphite éclairé, les pertes dissipatives (par radiation, conduction, convection) doivent être limitées.

Pour le préchauffage, l'atmosphère ambiante peut être oxydante ou non. La combustion a lieu dans une atmosphère riche en oxygène. A cet effet, de l'oxygène peut être introduit dans l'atmosphère ambiante ou plus précisément au niveau de la surface éclairée du graphite.

Lorsque la phase de préchauffage est terminée, l'oxygène est amené localement sous forme d'un ou de plusieurs jet(s) dirigé(s) vers la surface éclairée. Pour limiter le refroidissement de la surface, chacun des jets présente une inclinaison de 0 à 70° par rapport à la perpendiculaire au milieu de la surface éclairée.

Le procédé selon l'invention nécessite que la surface de graphite à traiter soit éclairée par le laser de façon quasi continue jusqu'à atteindre la température d'auto-combustion. L'apport énergétique de laser ne peut être interrompu que sur des temps très courts pendant lesquels le même laser éclaire un autre endroit de la surface du même graphite, cet endroit étant très peu éloigné du premier, de façon toujours à minimiser les pertes d'énergie.

La surface éclairée, soumise à un apport énergétique important, voit sa température augmenter rapidement (phase de préchauffage) jusqu'à atteindre la température de combustion, puis d'auto-combustion. La température atteinte à la fin de la phase de préchauffage est d'au moins 1000°C (par exemple, environ 1200°C). La température d'auto-combustion est d'environ 1800° à 2000°C pour un graphite non irradié. Elle varie avec la nature du graphite et peut être facilement déterminée par l'homme du métier, par exemple par un essai de combustion en laboratoire avec un brûleur.

Dès le moment où cette température est atteinte, le graphite de la surface éclairée brûle ; la combustion est auto-entretenue pendant un certain temps, variable selon la nature du graphite et la turbulence atmosphérique (vitesse, débit de jet par exemple). Il y a alors dégradation du graphite sur la surface préalablement éclairée (tache laser) et propagation au-delà de cette surface.

On peut faire cesser l'éclairage laser, dès que l'auto-combustion est amorcée. Mais l'éclairage laser doit être repris dès que l'auto-combustion s'est arrêtée. Il est évidemment plus intéressant de refaire un apport énergétique à l'aide du laser juste avant cet arrêt. Dans certains cas, il est inutile de revenir sur la surface avec le laser, l'auto-combustion étant suffisante. Ces opérations sont contrôlées par mesure de la température de la surface.

L'éclairage laser étant ôté de cette surface (dite première tache), il est dirigé vers un autre endroit de la surface de graphite à traiter et forme une seconde tache qui est traitée de la même manière que la premiére.

Le laser étant libéré, dès que le graphite de la seconde tache a atteint la température d'auto-combustion, il est dirigé soit vers la première tache soit pour former une troisième tache, selon les besoins.

Il est ainsi possible de balayer une surface de graphite à traiter et plus particulièrement d'un bloc de graphite.

Selon la forme du bloc à traiter, on peut déterminer préalablement à l'opération les endroits de la surface à éclairer, de façon à optimiser le balayage laser. On peut également rendre mobile le laser et/ou le bloc de graphite à traiter.

Le choix du laser et de son emplacement seront également déterminés en fonction de la forme de la surface à traiter pour avoir la surface éclairée la plus grande possible avec le maximum de puissance.

Ainsi avec un laser CO₂ fin de 10 µm et 22 kW, on a pu, en 6 taches de 15 cm de diamètre chacune, traiter une brique fixe de 20 cm x 150 cm en graphite non irradié de conductivité thermique égale à 70 W/cm.K.

Lors de la combustion, le graphite se dégrade en gaz carbonique (en majeure partie, à cause de l'excès d'oxygène) et en monoxyde de carbone. Sous l'effet des contraintes thermiques, des poussières sont créées et les blocs se fragmentent plus ou moins, ce qui facilite le traitement du bloc.

On constate lors de la mise en oeuvre de ce procédé, que les poussières créées, maintenues au voisinage du graphite, sont pratiquement brûlées en totalité. Seules de faibles quantités se retrouvent dans les effluents gazeux.

Les gaz créés sont extraits et envoyés dans une unité de traitement des effluents gazeux (lavages, filtrations ...) avant d'être rejetés dans l'environnement selon les normes de rejet en vigueur.

Lorsqu'il s'agit de traiter du graphite contaminé, les radio-éléments se retrouvent dans les effluents gazeux. Des procédés et dispositifs connus de traitement de ces effluents peuvent alors être utilisés. Lors du traitement de graphite contaminé, les effluents gazeux sont extraits en créant une légère dépression dans l'enceinte contenant le graphite. On évite ainsi la dissémination possible des contaminants hors de l'enceinte.

On a ainsi pu traiter des briques simulant des briques de réacteur UNGG avec une bonne efficacité de dégradation et dans des conditions nucléairement sûres.

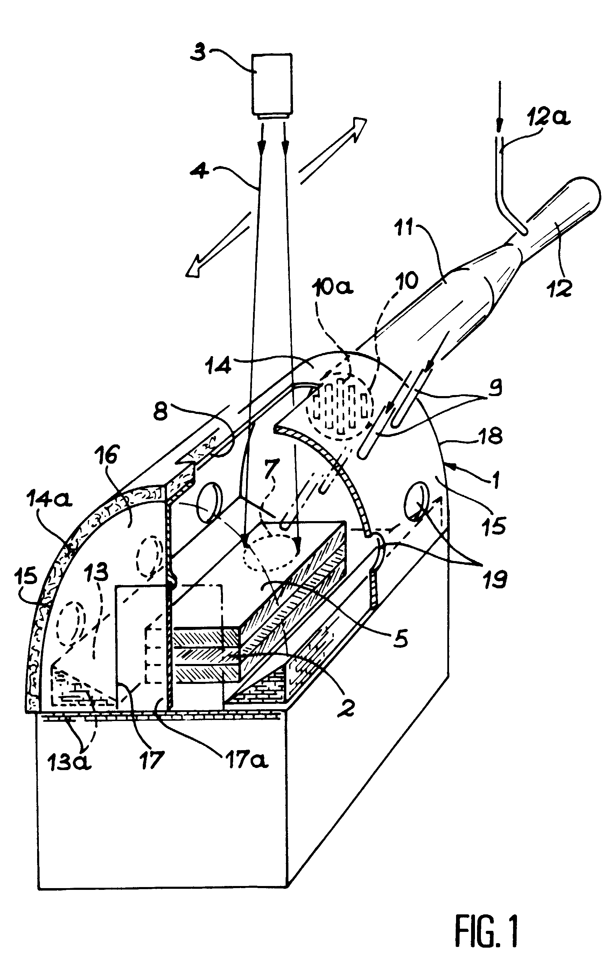

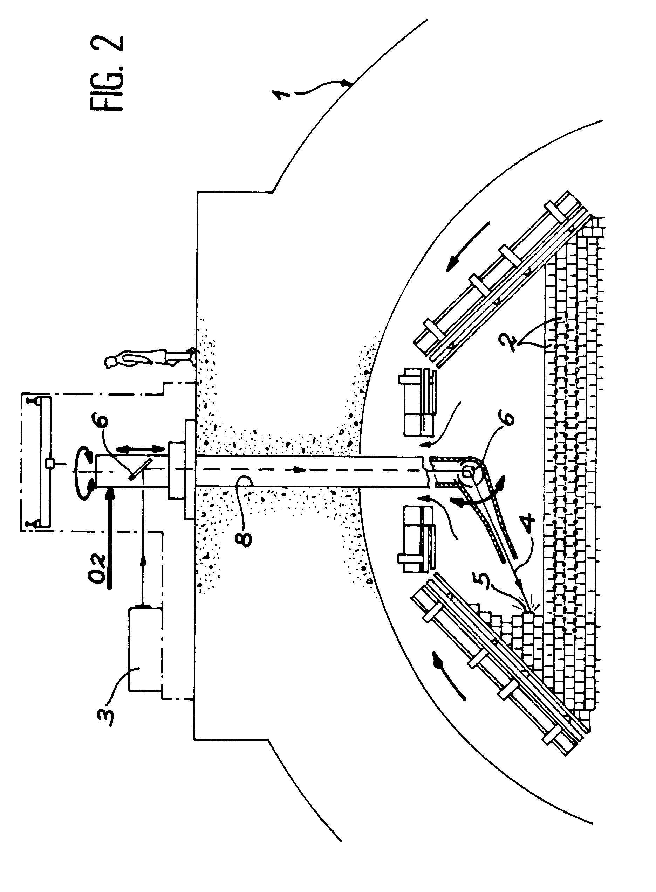

L'invention sera mieux comprise en se référant aux figures 1 et 2, dans lesquelles :
- la figure 1 est une vue en perspective et en coupe partielle, illustrant un premier mode de réalisation de l'invention dans lequel le graphite est introduit sous forme de blocs dans une enceinte prévue à cet effet ; et
- la figure 2, est une vue en coupe illustrant un deuxième mode de réalisation de l'invention, dans lequel le graphite est traité in situ dans l'enceinte du réacteur lui-même.

L'enceinte 1 assure le confinement des gaz, poussières, ..., lors de l'incinération. Elle peut être constituée par un four (figure 1) ou par les parois mêmes d'un réacteur nucléaire (figure 2). Les parois de l'enceinte peuvent assurer en partie ou en totalité l'isolation thermique. Si nécessaire, des écrans thermiques supplémentaires sont rapportés.

Dans le cas du traitement en four (figure 1) de graphite contaminé par des radioéléments, il est nécessaire d'ajouter des protections radiologiques (protection contre l'irradiation).

Dans l'enceinte 1 se trouve le graphite 2 à traiter, représenté sous forme de briques sur les deux figures. L'enceinte est sous atmosphère oxydante (air, oxygène ...) amené par une ou des ouvertures aménagées dans au moins une paroi de l'enceinte.

Un laser 3 émet un rayon ou faisceau laser 4 pour éclairer une surface 5 du graphite. Le laser est situé à l'extérieur de l'enceinte, ce qui facilite son exploitation .

Le rayon laser 4 peut être dirigé directement (figure 1) ou au moyen de jeux de miroirs 6 (figure 2) sur la surface 5 à éclairer, où il forme une tache 7 (figure 1). Un ou plusieurs lasers peuvent être employés simultanément.

Une ouverture 8 est aménagée dans une paroi de l'enceinte, pour permettre le passage du rayon laser 4. Il y a de préférence autant d'ouvertures que de lasers. Pour que le confinement soit maintenu au niveau de cette ouverture, elle est munie de moyens permettant simultanément son obturation et le passage du rayon laser. De tels moyens peuvent être un rideau d'air, une fenêtre transparente au rayon laser, etc.

Sur la paroi de l'enceinte est aménagée au moins une ouverture pour l'introduction de comburant (oxygène ou gaz riche en oxygène). Chaque ouverture est aménagée de préférence en face de la surface du graphite à traiter. Elle est reliée à une tuyauterie 9 par laquelle arrive le gaz comburant.

L'extrémité de la tuyauterie 9 débouchant dans l'enceinte est munie d'une ou plusieurs buses (non représentées) dont la forme est choisie pour assurer, en fonction des débits entrant, les vitesses de courant de comburant souhaitées.

Dans ce dernier cas, la tuyauterie 9 est inclinée de telle façon que le jet soit dirigé sur la surface du graphite avec un angle de 0 à 70° par rapport à la perpendiculaire au plan moyen de la surface du graphite éclairée ou à éclairer.

On peut aussi munir la tuyauterie 9 de moyens permettant son coulissement, pour émettre le jet le plus près possible de la surface du graphite.

On peut prévoir de monter en extrémité une buse tournante, afin de pouvoir faire varier la direction du jet.

Par au moins une ouverture 10 aménagée dans l'enceinte, de préférence à proximité de la surface de graphite à traiter, les gaz produits sont extraits de l'enceinte, et envoyés par une tuyauterie 11 vers un dispositif d'extraction des gaz. Ce dispositif peut être un ventilateur (non représenté). Le dispositif d'extraction crée également une dépression dans l'enceinte 1, qui est un facteur supplémentaire favorable au confinement. Pour éviter la propagation des poussières dans la tuyauterie 11 et le dispositif d'extraction, on munit l'ouverture 10 de moyens de filtrage adéquats connus de l'homme du métier, par exemple des déflecteurs 10a.

Les gaz extraits sont ensuite envoyés, si nécessaire, vers une unité de traitement (non représentée) adaptée à la nature desdits gaz. Dans le cas de gaz produits par l'incinération de graphite provenant de réacteurs nucléaires UNGG, il est particulièrement avantageux de prévoir dans l'unité de traitement une colonne de lavage à l'eau pour capter Les radioéléments solubles dans l'eau (³H, Co ...).

La figure 1 montre un mode de réalisation particulièrement avantageux pour traiter des blocs de graphite, extraits de leur installation et transportés vers l'enceinte d'incinération 1. Les chargements dans l'enceinte se succèdent donc de manière discontinue.

Dans ce dispositif, l'enceinte 1 est un four comprenant une sole 13 en briques réfractaires, une voûte 14, des parois latérales 15 prolongeant la voûte jusqu'à la sole, et des parois d'extrémité 16, 18 fermant la voûte.

Par ailleurs, la voûte 14 et les parois 15 sont calorifugées extérieurement en 14a, et réalisées en un matériau tel que de l'acier inoxydable poli, apte à réfléchir l'énergie radiative vers la sole 13 ; cette dernière a une forme en creux pour collecter les particules de graphite formées lors de l'incinération.

En outre, la voûte 14 comporte l'ouverture 8 pour le passage du rayon laser 4 et des moyens pour l'obturation de cette ouverture, autorisant le passage du rayon laser.

Les parois latérales 15 prolongeant la voûte comportent des ouvertures par lesquelles sont émis les jets de comburant. L'une des parois d'extrémité 16 fermant la voûte comporte une ouverture 17 pour l'introduction des blocs à incinérer, et une porte 17a pour l'obturer. Enfin, l'autre paroi d'extrémité 18 fermant la voûte comporte l'ouverture 10 pour l'extraction des gaz.

La voûte 14 et les parois latérales 15 la prolongeant peuvent être d'un seul tenant ou bien les parois latérales 15 peuvent être par exemple verticales et la voûte rapportée sur le haut desdites parois.

Des ouvertures ou ouies 19 sont pratiquées dans les parois de l'enceinte pour permettre une entrée d'air.

La figure 2 montre un dispositif utilisé avantageusement pour le traitement in situ, dans le réacteur même, des coeurs de graphite.

La particularité de ce dispositif réside en ce que l'enceinte 1 est constituée par les parois mêmes du réacteur entourant le coeur. On doit alors procéder à des carottages pour créer les ouvertures nécessaires et aménager les moyens de l'invention sur ces ouvertures.

Le laser 3 étant assez éloigné du coeur, un jeu de miroirs 6 permet de régler sa direction. Il est bien évident que plusieurs lasers peuvent être employés simultanément en prenant les précautions nécessaires de sécurité.

Avec le dispositif four de la figure 1, on a utilisé un laser CO₂ de type continu alimenté par une source d'énergie pouvant atteindre une puissance de 22 kW. D'une taille initiale de 40 mm avec une répartition d'énergie distribuée suivant un anneau, le faisceau laser est mis en forme par une tête de focalisation à miroirs refroidis. Ces miroirs permettent le déplacement latéral du faisceau de 50 cm au point d'impact et donc un balayage lent du graphite par le faisceau laser.

Le four est composé d'une coupole hémicylindrique 14 en acier inoxydable réfléchissant le rayonnement du graphite chaud et recouverte de laine de roche 14a. Une ouverture 8 est aménagée à son sommet pour le passage du faisceau laser 4. Une sortie des produits de combustion est réalisée au travers d'une conduite 11 de diamètre 30 cm. Une porte d'accès 17a se situe sur la face opposée à l'orifice d'évacuation 10. Six ouïes d'amenée d'air frais 19 sont aménagées de part et d'autre de la coupole. La sole 13 est protégée par des briques réfractaires.

L'oxygène comburant est acheminé par quatre buses cylindriques fixes 9 de diamètre 9 mm, traversant unilatéralement la coupole 14 en oblique et visant l'axe longitudinal du four. Chaque buse 9 peut être équipée de quatre sous buses isocinétiques.

Les produits de combustion sont évacués par une cheminée (non représentée) à l'extérieur du local, à l'aide d'un extracteur centrifuge électrique avec un débit de 4000 Nm³/heure. Un piquage par une conduite souple de faible diamètre est relié à un système d'analyse des gaz.

Afin d'abaisser sensiblement la température des gaz à éjecter, une pulvérisation d'eau est incorporée en 12a à l'écoulement au moyen d'un venturi monté sur la tuyauterie 11.

Les échantillons mis en combustion sont constitués de graphite 5 dont les propriétés physicochimiques sont proches de celles du graphite irradié. Ceci concerne plus parti culièrement la conductivité thermique.

Ce sont des briques de dimension 505x180x150 cm pesant 26 kg. La température de surface, dans la zone éclairée par le faisceau, étant le point de repère, est évaluée par un pyromètre infrarouge travaillant dans le spectre 800-1100 nm, de 550°C à 2000°C, avec un temps de réponse de l'ordre de la milliseconde.

L'analyse des gaz porte sur les teneurs en CO, en CO2, en O2 et en humidité relative. Une partie des effluents est aspirée, après le refoulement de l'extracteur 12, par une petite pompe en direction des appareils de mesure. Ainsi, les gaz sont déjà en partie refroidis et ne troublent pas le fonctionnement des capteurs.

Dans ces conditions, une vitesse de combustion de 40 kg/h est atteinte, ce qui représente une cinétique de 0,12 kg/s.m². Une fois les régimes de préchauffage établis (montée en température jusqu'au bilan thermique), il suffit par un moyen approprié de recharger en graphite le four pour que l'opération continue. Un débit de 1500 l/h d'eau pulvérisée a été nécessaire pour maintenir les gaz de sortie à 110°C. Sur la surface de la brique en combustion, la température se situe entre 1000 et 2500°C. Une flamme bleue danse au-dessus, témoignant de la combustion de l'oxyde de carbone formé en premier lieu, puis transformé en gaz carbonique à la surface du matériau. Ces flammes ne dépassent pas une hauteur de 5 cm.

Avec le dispositif montré figure 2, un ou deux faisceaux laser infrarouge 4 de 10 kW minimum sont dirigés sur une brique élémentaire de graphite, ceci par le moyen de carottages effectués au travers de la protection biologique en béton 1 du réacteur puis au travers des structures métalliques telles que la peau d'étanchéité, l'écran thermique, etc. et par le moyen de miroirs 6 et conduits adéquats.

Cette combustion crée des calories qui sont évacuées en mettant l'ensemble du coeur en dépression, et en laissant pénétrer par des orifices contrôlés (non représentés) un débit d'air voisin de 6000 Nm³/h. C'est cet air, en circulant dans tout le réseau qu'occupait autrefois le gaz CO2, qui va maintenir l'ensemble du coeur à environ 100°C.

Seul le coeur de la brique de graphite en combustion est à 800°C, les briques qui la touchent sont à 300°C. L'air extrait est cycloné, refroidi, puis évacué à travers des filtres de haute efficacité, vers une cheminée (non représentée).

Parce que l'ensemble du bloc est à 100°C, et que la combustion est contrôlée localement, il n'y a pas de risque d'emballement de la réaction et de combustion incontrôlée du graphite. En effet, on a constaté que la résistance thermique entre deux briques ne permettait pas à la combustion de se propager facilement d'une brique à l'autre.

Le procédé et le dispositif selon l'invention présentent les avantages suivants :
- en milieu toxique, nécessitant un confinement, comme par exemple en milieu nucléaire, le laser peut être mis à l'extérieur de l'enceinte, ce qui facilite son entretien ; par ailleurs, le four ne contient pas de partie mobile nécessitant un entretien ;
- la mobilité du faisceau laser par le moyen de miroirs appropriés permet de relancer la combustion sur les points de surface le nécessitant ;
- le laser n'introduit pas d'agent réducteur, au contraire d'un brûleur, il favorise ainsi la combustion et donc les rendements ;
- le laser permet de chauffer à la fois en surface et en profondeur, ce qui maintient des gradients de température plus homogènes dans le graphite ;
- la simplicité du dispositif four et son faible coût autorisent la mise en parallèle de plusieurs fours avec un même laser. En effet, chaque fois que l'autocombustion est atteinte dans un four le laser peut être utilisé en préchauffage ou en entretien de combustion dans un autre. Le rendement global de l'opération en est d'autant meilleur ;
- dans le dispositif figure 2, l'attaque directe du graphite permet d'économiser des dispositifs extrêmement coûteux.

## Revendications

1. Procédé pour l'incinération de graphite, sous forme de bloc, caractérisé par les étapes suivantes :
- on éclaire d'abord un premier endroit de la surface du graphite avec un laser de puissance (3), pour y former une première tache, pendant une phase de préchauffage ;
- on dirige ensuite au moins un jet de comburant sur le premier endroit, en y maintenant l'éclairage laser, au moins jusqu'à ce que la température d'auto-combustion du graphite soit atteinte ; et
- on répète les étapes précédentes en d'autres endroits de la surface du graphite, de façon à balayer toute cette surface.

2. Procédé selon la revendication 1, caractérisé en ce qu'on utilise un laser de puissance au moins égale à 80 W/cm².

3. Procédé selon l'une quelconque des revendications précédentes, caractérisé en ce qu'on utilise un rayon laser faisant un angle compris entre 0 à 70° par rapport à la perpendiculaire à l'endroit éclairé.

4. Procédé selon l'une quelconque des revendications précédentes, caractérisé en ce qu'on dirige le jet de comburant selon un angle compris entre 0° et 70° par rapport à la perpendiculaire à l'endroit éclairé.

5. Dispositif pour l'incinération de graphite sous forme de bloc, caractérisé en ce qu'il comprend :
- une enceinte (1) apte à contenir au moins un bloc de graphite (2) à traiter ;
- au moins un laser de puissance (3) placé en dehors de l'enceinte, apte à émettre un rayon laser (4) vers la surface du graphite (2), au travers d'une ouverture (8) formée dans l'enceinte ;
- des moyens d'obturation de l'ouverture (8), pour le confinement de poussières et gaz dans l'enceinte ;
- des moyens pour déplacer un point d'impact du rayon laser par rapport à la surface du graphite, de façon à effectuer un balayage de cette surface par le rayon laser ;
- au moins une tuyauterie (9) d'injection de comburant débouchant dans l'enceinte et comportant une buse orientée vers la surface du graphite ;
- au moins une tuyauterie (11) d'extraction de gaz de combustion hors de l'enceinte, reliée à un dispositif (12) d'extraction de gaz de combustion, à l'extérieur de l'enceinte.

6. Dispositif selon la revendication 5, caractérisé en ce que le laser (3) émet de façon continue à une longueur d'onde capable d'être absorbée par le graphite à traiter, avec une puissance minimum de 80 W/ cm², ledit laser étant disposé de façon à ce que le rayon laser fasse un angle de 0 à 70° avec la perpendiculaire au plan moyen de la surface (7) éclairée.

7. Dispositif selon l'une quelconque des revendications 5 et 6, caractérisé en ce que des moyens (10a) pour maintenir des poussières dans l'enceinte sont montés dans une ouverture (10) par laquelle ladite tuyauterie (11) d'extraction de gaz débouche dans l'enceinte.

8. Dispositif selon l'une quelconque des revendications 5 à 7, caractérisé en ce que les moyens d'obturation comprennent un rideau d'air.

9. Dispositif selon l'une quelconque des revendications 5 à 8, caractérisé en ce que la tuyauterie (9) d'injection de comburant est inclinée selon un angle compris entre 0 et 70° par rapport à la perpendiculaire à la surface éclairée.

10. Dispositif selon l'une quelconque des revendications 5 à 9, caractérisé en ce que le dispositif d'extraction comprend un venturi (12) monté sur la tuyauterie (11) d'extraction de gaz, dans lequel est introduit de l'eau.

11. Dispositif selon l'une quelconque des revendications 5 à 10, caractérisé en ce qu'il comporte une colonne de lavage à l'eau placée sur la tuyauterie (11) d'extraction de gaz.

12. Dispositif selon l'une quelconque des revendications 5 à 11, caractérisé en ce que :
- l'enceinte (1) et un four muni d'une sole (13) en briques réfractaires, d'une voûte (14), de parois latérales (15) prolongeant la voûte jusqu'à la sole, et de deux parois d'extrémité (16,18) fermant la voûte,
- la voûte (14) est calorifugée extérieurement, faite en un matériau apte à réfléchir l'énergie radiative vers la sole ; ladite sole ayant une forme en creux pour collecter les particules de graphite,
- la voûte (14) comporte ladite ouverture (2) pour le passage du rayon laser (4),
- les parois latérales (15) prolongeant la voûte (14) comportent des ouvertures sur lesquelles sont raccordées les tuyauteries (9) d'introduction de comburant,
- l'une des parois d'extrémité (16) fermant la voûte comporte une ouverture (17) pour l'introduction des blocs de graphite, et une porte (17a) pour l'obturer,
- l'autre paroi d'extrémité (18) fermant la voûte comporte une ouverture (10) sur laquelle est raccordée la tuyauterie (11) d'extraction de gaz.

13. Dispositif selon la revendication 12, caractérisé en ce que la voûte (14) est en acier inoxydable poli.

14. Dispositif selon l'une quelconque des revendications 5 à 11, utilisé pour le traitement in situ dans un réacteur nucléaire, de blocs de graphite constituant le coeur dudit réacteur, caractérisé en ce que :
- l'enceinte (1) est constituée par les parois entourant le coeur,
- au moins une desdites parois comporte au moins une ouverture aménagée pour le passage du rayon laser (4) et des moyens pour déplacer le point d'impact, pour le passage de la tuyauterie (9) d'introduction de comburant, pour le passage de la tuyauterie d'extraction des gaz, et pour le passage d'air provenant de l'extérieur.

## Patentansprüche

1. Verfahren zur Veraschung von Graphit in Blockform, durch die folgenden Schritte gekennzeichnet:
- zunächst bestrahlt man während einer Vorerwärmungsphase eine erste Stelle der Oberfläche des Graphits mit einem Leistungslaser (3), um dort einen ersten Leuchtfleck zu bilden,
- anschließend richtet man wenigstens einen Strahl von Verbrennungsmittel auf die erste Stelle, und hält dabei dort die Laserbestrahlung aufrecht, solange zumindest, bis die Selbstverbrennungstemperatur des Graphits erreicht ist, und
- man wiederholt die vorhergehenden Schritte an weiteren Stellen der Oberfläche des Graphits, um diese gesamte Oberfläche zu überstreichen.

2. Verfahren nach Anspruch 1, dadurch gekennzeichnet, daß man einen Leistungslaser mit wenigstens 80 W/cm² verwendet.

3. Verfahren nach einem der vorhergehenden Ansprüche, dadurch gekennzeichnet, daß man einen Laserstrahl verwendet, der gegenüber der Normalen der bestrahlten Stelle einen Winkel zwischen 0 und 70° bildet.

4. Verfahren nach einem der vorhergehenden Ansprüche, dadurch gekennzeichnet, daß man den Strahl von Verbrennungsmittel unter einem Winkel zwischen 0 und 70° zur Normalen der bestrahlten Stelle ausrichtet.

5. Vorrichtung zur Veraschung von Graphit in Blockform, dadurch gekennzeichnet, daß sie umfaßt:
- einen Behälter (1), geeignet, wenigstens einen zu behandelnden Graphitblock (2) aufzunehmen,
- wenigstens einen Leistungslaser (3), außerhalb des Behälters aufgestellt und geeignet, einen Laserstrahl (4) durch eine in dem Behälter ausgebildete Öffnung (8) auf die Oberfläche des Graphits (2) zu senden,
- Einrichtungen zum Absperren der Öffnung (8), um Stäube und Gase in dem Behälter einzuschließen,
- Einrichtungen, um einen Auftreffpunkt des Laserstrahls gegenüber der Oberfläche des Graphits zu verschieben, um ein Überstreichen dieser Oberfläche durch den Laserstrahl zu bewerkstelligen,
- wenigstens eine Leitung (9) zum Einspritzen von Verbrennungsmittel, in den Behälter mündend und eine Düse umfassend, die auf die Oberfläche des Graphits hin ausgerichtet ist,
- wenigstens eine Leitung (11) zur Extraktion von Verbrennungsgasen aus dem Behälter, versehen mit einer Vorrichtung (12) zur Extraktion von Verbrennungsgasen im Äußeren des Behälters.

6. Vorrichtung nach Anspruch 5, dadurch gekennzeichnet, daß der Laser (3) bei einer Wellenlänge, die der zu behandelnde Graphit absorbieren kann, kontinuierlich mit einer Mindestleistung von 80 W/cm² emittiert, wobei der genannte Laser derart angeordnet ist, daß der Laserstrahl einen Winkel von 0 bis 70° mit der Normalen der mittleren Ebene der bestrahlten Oberfläche (7) bildet.

7. Vorrichtung nach einem der Ansprüche 5 und 6, dadurch gekennzeichnet, daß in einer Öffnung (10), durch welche die genannte Leitung (11) zur Gasextraktion in den Behälter mündet, Einrichtungen (10a) zum Festhalten der Stäube in dem Behälter angebracht sind.

8. Vorrichtung nach einem der Ansprüche 5 bis 7, dadurch gekennzeichnet, daß die Einrichtungen zur Absperrung einen Luftvorhang umfassen.

9. Vorrichtung nach einem der Ansprüche 5 bis 8, dadurch gekennzeichnet, daß die Leitung (9) zum Einspritzen von Verbrennungsmittel in einem Winkel zwischen 0 und 70° zur Normalen der bestrahlten Oberfläche geneigt ist.

10. Vorrichtung nach einem der Ansprüche 5 bis 9, dadurch gekennzeichnet, daß die Vorrichtung zur Extraktion eine in der Leitung (11) zur Gasextraktion angebrachte Venturi-Düse (12) umfaßt, in die Wasser eingeführt wird.

11. Vorrichtung nach einem der Ansprüche 5 bis 10, dadurch gekennzeichnet, daß sie eine Kolonne zum Waschen mit Wasser umfaßt, die in der Leitung (11) zur Gasextraktion angebracht ist.

12. Vorrichtung nach einem der Ansprüche 5 bis 11, dadurch gekennzeichnet, daß
- der Behälter (1) ein Ofen ist, versehen mit einer Herdplatte (13) aus hitzebeständigen Steinen, mit einer Wölbung (14), mit seitlichen Wänden (15), die die Wölbung bis auf die Herdplatte verlängern, und mit zwei Endwänden (16, 18), die die Wölbung abschließen,
- die Wölbung (14) äußerlich wärmeisoliert ist und aus einem Material hergestellt ist, das geeignet ist, die Strahlungsenergie zur Herdplatte hin zu reflektieren, wobei genannte Herdplatte Muldenform hat, um die Graphitpartikel zu sammeln,
- die Wölbung (14) die genannte Öffnung (2) für den Durchtritt des Laserstrahls (4) enthält,
- die seitlichen, die Wölbung (14) verlängernden Wände (15) Öffnungen umfassen, an denen die Leitungen (9) zur Einführung des Verbrennungsmittels angeschlossen sind,
- eine der die Wölbung abschließenden Endwände (16) eine Öffnung (17) zur Einführung der Graphitblöcke und eine Tür (17a) zur Absperrung dieser Öffnung umfaßt,
- die andere die Wölbung abschließende Endwand (18) eine Öffnung (10) umfaßt, an der die Leitung (11) zur Gasextraktion angeschlossen ist.

13. Vorrichtung nach Anspruch 12, dadurch gekennzeichnet, daß die Wölbung (14) aus poliertem rostfreiem Stahl ist.

14. Vorrichtung nach einem der Ansprüche 5 bis 11, verwendet zur Behandlung von Graphitblöcken in situ in einem Kernreaktor, wobei die Graphitblöcke den Kern des genannten Reaktors bilden, dadurch gekennzeichnet, daß
- der Behälter (1) aus den Wänden besteht, die den Reaktorkern umgeben,
- wenigstens eine der genannten Wände zumindest eine Öffnung umfaßt, die eingerichtet ist für den Durchtritt des Laserstrahls (4) und der Mittel zur Verschiebung des Auftreffpunkts, für den Durchgang der Leitung (9) zur Einführung des Verbrennungsmittels, für den Durchgang der Leitung zur Gasextraktion und für den Durchtritt von Luft, die von außen stammt.

## Claims

1. Process for incineration of graphite, in block form, characterized by the following steps:
- a first zone on the surface of the graphite is first illuminated with a power laser (3), in order to form thereon a first spot, during a preheating phase;
- at least one jet of oxidant is then directed onto the first zone, while continuing to illuminate it with the laser, at least until the spontaneous combustion temperature of graphite is reached; and
- the preceding steps are repeated at other zones on the surface of the graphite, so as to scan all of this surface.

2. Process according to Claim 1, characterized in that a laser with a power at least equal to 80 W/cm² is used.

3. Process according to either of the preceding claims, characterized in that a laser beam making an angle of between 0 and 70° with respect to the perpendicular to the illuminated zone is used.

4. Process according to any one of the preceding claims, characterized in that the oxidant jet is directed at an angle of between 0° and 70° with respect to the perpendicular to the illuminated zone.

5. Device for the incineration of graphite in block form, characterized in that it comprises:
- a chamber (1) which can contain at least one graphite block (2) to be treated;
- at least one power laser (3), placed outside the chamber and capable of emitting a laser beam (4) towards the surface of the graphite (2), through an aperture (8) formed in the chamber;
- means for sealing the aperture (8), in order to confine dust and gas in the chamber;
- means for moving a point of impact of the laser beam relative to the graphite surface, so as to make the laser beam scan this surface;
- at least one oxidant injection pipe (9), opening into the chamber and including a nozzle oriented towards the graphite surface;
- at least one pipe (11), for extracting combustion gas from the chamber, which is connected to a combustion gas extraction device (12) outside the chamber.

6. Device according to Claim 5, characterized in that the laser (3) emits continuously at a wavelength that can be absorbed by the graphite to be treated, with a minimum power of 80 W/cm², the said laser being arranged in such a way that the laser beam makes an angle of 0 to 70° with the perpendicular to the mid-plane of the illuminated surface (7).

7. Device according to either of Claims 5 and 6, characterized in that the means (l0a) for keeping dust in the chamber are mounted in an aperture (10) through which the said gas extraction pipe (11) opens into the chamber.

8. Device according to any one of Claims 5 to 7, characterized in that the sealing means comprise an air curtain.

9. Device according to any one of Claims 5 to 8, characterized in that the oxidant injection pipe (9) is inclined at an angle of between 0 and 70° with respect to the perpendicular to the illuminated surface.

10. Device according to any one of Claims 5 to 9, characterized in that the extraction device comprises a venturi (12) which is mounted on the gas extraction pipe (11) and into which water is introduced.

11. Device according to any one of Claims 5 to 10, characterized in that it includes a water-scrubbing column placed on the gas extraction pipe (11).

12. Device according to any one of Claims 5 to 11, characterized in that:
- the chamber (1) is a furnace equipped with a floor (13) made of refractory bricks, a roof (14), side walls (15) which extend the roof as far as the floor, and two end walls (16, 18) closing the roof,
- the roof (14) is externally lagged and made of a material which can reflect radiative energy towards the floor, the said floor having a hollow shape in order to collect the graphite particles;
- the roof (14) includes the said aperture (2) for passage of the laser beam (4),
- the side walls (15) extending the roof (14) include apertures to which the oxidant inlet pipes (9) are connected;
- one of the end walls (16) closing the roof includes an aperture (17) for inserting the graphite blocks, and a door (17a) to seal it;
- the other end wall (18) closing the roof includes an aperture (10) to which the gas extraction pipe (11) is connected.

13. Device according to Claim 12, characterized in that the roof (14) is made of polished stainless steel.

14. Device according to any one of Claims 5 to 11, used for in situ treatment in a nuclear reactor of graphite blocks constituting the core of the said reactor, characterized in that:
- the chamber (1) is constituted by the walls surrounding the core;
- at least one of the said walls includes at least one aperture arranged for passage of the laser beam (4) and means for moving the point of impact, for passage of the oxidant inlet pipe (9), for passage of the gas extraction pipe, and for passage of the air originating from outside.
